# EUROPÄISCHE PATENTSCHRIFT

(11) **EP 3 707 403 B1**
(45) Veröffentlichungstag und Bekanntmachung des Hinweises auf die Patenterteilung: **17.03.2021**
(21) Anmeldenummer: 18800583.9
(22) Anmeldetag: 07.11.2018
(51) Int. Cl.: F16D 55/00, F16D 65/18, F16D 55/226

(54) **LAGERANORDNUNG FÜR EINEN BREMSENTRÄGER**
BRAKE CARRIER SUPPORT
SUPPORT D'UN FLASQUE DE FREIN

(30) Priorität: 09.11.2017 DE 102017126200
(43) Veröffentlichungstag der Anmeldung: 16.09.2020
(73) Patentinhaber: SAF-HOLLAND GmbH, 63856 Bessenbach (DE)
(72) Erfinder: HARTMANN, Mark, 63869 Heigenbrücken (DE); WALLMEIER, Stefan, 63773 Goldbach (DE)
(74) Vertreter: Müller Schupfner & Partner Patent- und Rechtsanwaltspartnerschaft mbB
(86) Internationale Anmeldenummer: PCT/EP2018/080475
(87) Internationale Veröffentlichungsnummer: WO 2019/092019

(56) Entgegenhaltungen:
- WO-A1-2005/095815
- WO-A1-2017/040029
- DE-U1- 20 021 587

## Beschreibung

Die Erfindung betrifft eine Lageranordnung für einen Bremsträger, welcher insbesondere Anwendung in Nutzfahrzeugen findet.

Lageranordnungen für Bremsträger sind aus dem Stand der Technik bekannt. Diese dienen dazu, einen Bremsenträger an einer Achse, Welle oder einem Fahrwerksteil festzulegen. Der Bremsträger umfasst oder trägt dabei insbesondere einen Bremssattel, welcher dazu dient, die Bremsbeläge des Bremssattels zu lagern bzw. zu führen. Problematisch bei dem im Stand der Technik bekannten Lageranordnungen ist, dass diese, insbesondere bei der Montage oder bei der Wartung, einen hohen Handhabungsaufwand verursachen, da diese mit externen Mitteln abgestützt oder gehalten werden müssen, bis der Bremsenträger - meist durch Schrauben - ortsfest fixiert werden kann.

Die WO 2017/040029 A1 zeigt eine Anordnung zum Lagern von Bremsbacken einer Trommelbremse, wobei die Anordnung einem äußeren und einen inneren Abschnitt aufweist, wobei diese Abschnitte relativ zu einander verstellbar sind.

Es ist daher die Aufgabe der vorliegenden Erfindung eine Lageranordnung für einen Bremsträger bereitzustellen, welcher nur einen geringen Montage- und Wartungsaufwand verursacht.

Diese Aufgabe wird mittels einer Lageranordnung für einen Bremsenträger mit den Merkmalen des Anspruchs 1 gelöst. Vorteilhafte Weiterbildungen und Merkmale ergeben sich aus den abhängigen Ansprüchen.

Erfindungsgemäß umfasst eine Lageranordnung für einen Bremsenträger, insbesondere für ein Nutzfahrzeug, ein Halteelement und ein Bremsmitteltragelement, wobei das Halteelement form-, stoff- und/oder kraftschlüssig an einer Achse oder einem Fahrwerksteil festgelegt ist oder festlegbar ist, wobei sich die Achse entlang einer Achsrichtung erstreckt, wobei das Bremsmitteltragelement einen ersten Montagebereich aufweist, wobei das Halteelement einen ersten Haltebereich aufweist, und wobei der erste Montagebereich unmittelbar oder mittelbar mit dem ersten Haltebereich in Eingriff steht oder bringbar ist, sodass eine Verlagerung entlang einer ersten Querrichtung zwischen dem Halteelement und dem Bremsmitteltragelement formschlüssig verhindert ist. Die erfindungsgemäße Lageranordnung findet insbesondere in Scheibenbremsen Anwendung, wobei diese Lageranordnung dazu dient, einen Bremsenträger zu lagern. Ein Bremsenträger ist das Element einer Bremse, insbesondere einer Scheibenbremse, welches die Reibelemente, insbesondere die Bremsbeläge, hält bzw. lagert. In anderen Worten bedeutet dies, dass der Bremsenträger ein Bremssattel sein kann. Das Bremsmitteltragelement ist dasjenige, insbesondere einstückige, Element der Lageranordnung, welches dazu dient, die Reibelemente der Bremse direkt oder indirekt zu halten bzw. zu lagern. Das Bremsmitteltragelement kann dabei ein separates Bauteil sein, welches im Kraftfluss zwischen dem Halteelement und dem Bremsenträger angeordnet ist oder alternativ auch ein Bestandteil des Bremsenträgers sein. Bevorzugt rotiert das Bremsmitteltragelement dabei in einem montierten Zustand nicht oder steht sogar komplett still in Relation zum Fahrzeug, an dem das Bremsmitteltragelement festgelegt ist. Das Halteelement der Lageranordnung ist dasjenige Element, welches zum Festlegen an der Achse einer Welle oder einem Fahrwerksteil dient. Ein Fahrwerksteil ist dabei insbesondere durch ein Teil des Dämpfungs- oder des Federsystems oder durch einen Bereich oder einen Teil des Fahrgestells gebildet. Alternativ bevorzugt kann das Halteelement beispielsweise auch einen Teil des Radlagergehäuses sein. Entscheidend ist, dass das Halteelement dazu ausgelegt ist, das Bremsmitteltragelement an der Achse, Welle oder dem Fahrwerksteil festzulegen. Bevorzugt ist das Halteelement aus einem metallischen Werkstoff, insbesondere Stahl bevorzugt Federstahl, gebildet. In einer beispielhaften Ausführungsform ist das Halteelement auf die Achse aufgepresst oder als ein Spannband um die Achse ausgebildet. Alternativ bevorzugt kann das Halteelement auch als eine Schweißkonstruktion ausgeführt sein. Zweckmäßigerweise besteht das Halteelement aus einem duktilen Werkstoff, wie beispielsweise Federstahl, wobei es bevorzugt ist, wenn zwischen dem Halteelement und der Achse ein Zwischenelement eingebracht ist, sodass das Halteelement mit der Achse über das Zwischenelement verspannt wird. Die Achse, an welcher das Halteelement form-, stoff- und/oder kraftschlüssig angeordnet ist, ist dabei bevorzugt das abstützende oder antreibende Element der zu bremsenden Achse, wobei die Achsrichtung unter anderem die Richtung sein kann, um welche das - mittels der Bremse zu bremsende - Rad rotiert. Bevorzugt ist die Achsrichtung daher insbesondere diejenige Richtung, in welcher sich die Breite des Fahrzeugs bestimmt, in welchem die Lageranordnung angeordnet ist oder dazu ausgelegt ist, angeordnet zu werden. Der erste Haltebereich des Halteelements und der erste Montagebereich des Bremsmitteltragelements dienen dazu, Kräfte und/oder Momente von dem Halteelement auf das Bremsmitteltragelement zu übertragen. In einer beispielhaften Ausführungsform ist der erste Montagebereich und der erste Haltebereich dabei wie eine Passfedernutverbindung ausgestaltet, wobei es bevorzugt ist, wenn sich die Passfeder in Richtung der ersten Querrichtung erstreckt. Wichtig ist, dass der erste Haltebereich derart mit dem ersten Montagebereich in Eingriff steht oder bringbar ist, dass eine Verlagerung zwischen dem Halteelement und dem Bremsmitteltragelement entlang der ersten Querrichtung in positiver und/oder in negativer Richtung formschlüssig verhindert ist. Bevorzugt erfolgt dieser Formschluss dadurch, dass Bereiche des ersten Haltebereichs unmittelbar mit dem ersten Montagebereich kontaktieren. Alternativ bevorzugt kann dieser Formschluss auch durch Einsatz von Zwischenelementen erreicht werden. Die erste Querrichtung ist die Richtung, welche senkrecht auf der Achsrichtung steht. Die erste Querrichtung liegt daher in einer Achsrichtungsebene, welche eine Normale parallel zur Achsrichtung aufweist. Die erste Querrichtung ist insbesondere diejenige Richtung, in welche sich der Bremsenträger beidseitig von der Rotationsachse der Achse erstreckt. In anderen Worten ist die erste Querrichtung daher insbesondere diejenige Richtung in einer Achsrichtungsebene, in welche die Bremsbeläge orientiert sind. Die erste Querrichtung ist daher bei einer vertikalen Anordnung der Bremsbeläge in einem Fahrzeug bevorzugt parallel zu dem Vektor der Erdbeschleunigung gerichtet. Durch das formschlüssige Verhindern der Verlagerung in die erste Querrichtung wird die Montage der Lageranordnung erheblich vereinfacht, sodass insbesondere Kosten bei der Montage und der Wartung gespart werden können.

Bevorzugt ist das Halteelement reversibel oder lösbar am Bremsmitteltragelement angeordnet. Unter reversibel oder lösbar angeordnet ist dabei zu verstehen, dass das Halteelement reversibel mit dem Bremsmitteltragelement verbunden ist, sodass diese beiden Bauteile zerstörungsfrei voneinander getrennt werden können. Dies kann insbesondere durch eine Schraubverbindung erreicht werden. Durch das reversible Anordnen des Halteelements relativ zum Bremsmitteltragelement wird die Montage und die Wartung der Bremse vereinfacht.

Vorteilhafterweise ist der erste Haltebereich und/oder der erste Montagebereich spiegelsymmetrisch bezüglich einer Ebene, wobei diese Symmetrieebene insbesondere eine Normale in Achsrichtung aufweist. Durch die spiegelsymmetrische Ausbildung des ersten Haltebereichs und/oder des ersten Montagebereichs - bezüglich der Symmetrieebene - wird erreicht, dass die Fertigung vereinfacht wird, sodass Kosten gespart werden können.

Zweckmäßigerweise weist der erste Haltebereich eine erste Haltefläche auf, wobei der erste Montagebereich eine erste Montagefläche aufweist und wobei die erste Haltefläche und die erste Montagefläche unmittelbar kontaktieren oder unmittelbar in Kontakt bringbar sind, sodass eine Verlagerung in die erste Querrichtung durch den unmittelbaren Kontakt der ersten Haltefläche mit der ersten Montagefläche verhindert ist oder verhinderbar ist. Die erste Haltefläche ist daher derart ausgebildet, dass diese unmittelbar mit der ersten Montagefläche im ersten Montagebereich in Kontakt tritt oder treten kann. Dieser formschlüssige Kontakt zwischen der ersten Haltefläche des Haltebereichs und der ersten Montagefläche des Montagebereichs ist dabei derart auszugestalten, dass eine Verlagerung dieser beiden Flächen relativ zueinander in die erste Querrichtung durch den unmittelbaren Kontakt verhindert ist oder verhinderbar ist. Insbesondere ist der Kontakt dabei derart ausgestaltet, dass dieser eine Verlagerung in positive und/oder in negative erste Querrichtung verhindert. Die negative erste Querrichtung ist insbesondere dadurch charakterisiert, dass diese die erste Querrichtung ist, die ausgehend vom ersten Montagebereich weg von der Achsrichtung zeigt. Durch den unmittelbaren Kontakt der ersten Haltefläche mit der ersten Montagefläche wird erreicht, dass zum einen die Montage vereinfacht wird und zum anderen, dass durch diesen unmittelbaren Kontakt eine Dämpfungswirkung bei Schwingungen - durch die auftretende Kontaktdämpfung - erreicht wird, welche insbesondere im Hinblick auf Bremsenquietschen vorteilhaft ist.

Bevorzugt sind die erste Haltefläche und die erste Montagefläche im Wesentlichen eben. Eine Fläche ist im Wesentlichen eben, wenn diese zwei perfekt parallele Ebenen, welche in Normalenrichtungen maximal 1 mm, bevorzugt 0,5 mm und besonders bevorzugt 0,2 mm voneinander beabstandet sind, nicht tangiert oder durchstößt. Die erste Haltefläche und/oder die erste Montagefläche weisen dabei bevorzugt eine ebene Fläche von mindestens 35 mm² auf. Hierdurch kann eine besonders sichere Last- bzw. Kraftübertragung zwischen den beiden Flächen sichergestellt werden. Besonders bevorzugt ist die ebene Fläche der ersten Montagefläche und/oder der ersten Haltefläche dabei bevorzugt mindestens 70 mm² groß. Hierdurch wird eine besonders hohe Verdrehsicherheit erreicht, sodass die Montage erleichtert wird.

Zweckmäßigerweise weisen die erste Haltefläche und/oder die erste Montagefläche eine gemittelte Normale auf, welche im Wesentlichen parallel zur ersten Querrichtung orientiert ist. Im Wesentlichen parallel bedeutet dabei, dass die beiden parallelen Richtungen einen Winkel von ± 20°, bevorzugt von ± 10° und besonders bevorzugt von ± 5° und weiterhin bevorzugt von ± 2° zueinander aufweisen dürfen. Durch die im Wesentlichen parallelen Normalen der Haltefläche und/oder der ersten Montagefläche zur ersten Querrichtung wird erreicht, dass nur geringe Kräfte quer zu der ersten Querrichtung durch den Formschluss zwischen der ersten Haltefläche und der Montagefläche resultieren und so ein definiertes Abstützten erreicht wird, welches die Handhabung bei der Montage vereinfacht.

In einer bevorzugten Ausführungsform ist die erste Haltefläche im Wesentlichen parallel zur ersten Montagefläche. Durch das im Wesentlichen parallele Ausbilden der beiden kontaktierenden Flächen wird erreicht, dass der Kontakt flächig erfolgt und so die beiden Flächen hohe Kräfte übertragen können, ohne dass die zulässige lokale Flächenbelastung überschritten wird. Im Wesentlichen parallel sind Flächen dann, wenn die gemittelten Normalen der Flächen im Wesentlichen parallel zueinander sind.

Zweckmäßigerweise weist der erste Haltebereich eine zweite Haltefläche auf, wobei der Montagebereich eine zweite Montagefläche aufweist, und wobei die zweite Haltefläche derart unmittelbar mit der zweiten Montagefläche in Eingriff steht oder bringbar ist, sodass eine Verlagerung entlang einer zweiten Querrichtung zwischen dem Halteelement und dem Bremsmitteltragelement formschlüssig verhindert ist. Die zweite Querrichtung steht senkrecht auf der Achsrichtung und auf der ersten Querrichtung. Die zweite Querrichtung ist daher insbesondere diejenige Richtung, welche von der Achsrichtung zu den Bremsbacken bzw. dem Flächenschwerpunkt des Reibkontakts der Bremsbacken mit dem Bremsenrotor weist. Durch das formschlüssige Abstützen des ersten Haltebereichs über die zweite Haltefläche gegenüber der zweiten Montagefläche des Montagebereichs in die zweite Querrichtung wird die Montage der Lageranordnung weiter vereinfacht, da eine externe oder manuelle Abstützung der Lageranordnung, insbesondere des Halteelements, während der Montage kaum oder gar nicht benötigt wird.

In einer bevorzugten Ausführungsform weisen die zweite Haltefläche und/oder die zweite Montagefläche eine gemittelte Normale auf, welche im Wesentlichen parallel zur zweiten Querrichtung orientiert ist. Hierdurch kann erreicht werden, dass die durch den Kontakt dieser Flächen induzierten Kräfte im Wesentlichen in die zweite Querrichtung weisen, sodass im Wesentlichen keine Kräfte quer zur zweiten Querrichtung - durch diesen formschlüssigen Kontakt - induziert werden, und somit die Handhabung bei der Montage und der Wartung erleichtert wird.

Bevorzugt ist die zweite Haltefläche im Wesentlichen parallel zur zweiten Montagefläche. Durch das im Wesentlichen parallele Ausbilden der zweiten Haltefläche zur zweiten Montagefläche wird erreicht, dass diese insbesondere flächig miteinander kontaktieren, sodass auch hohe Lasten zwischen diesen beiden Flächen übertragen werden können.

Zweckmäßigerweise umgibt der erste Haltebereich den ersten Montagebereich zumindest bereichsweise in Richtung der ersten Querrichtung und/oder in Richtung der zweiten Querrichtung. Ein bereichsweises Umgeben in Richtung der ersten und/oder der zweiten Querrichtung ist insbesondere dadurch charakterisiert, dass der erste Haltebereich relativ zum ersten Montagebereich in positiver und in negativer erster Querrichtung und/oder in positiver und in negativer zweiter Querrichtung gegen eine relative Verlagerung formschlüssig abgestützt ist oder abstützbar ist. Zweckmäßigerweise verfügt der erste Haltebereich dabei über eine dritte Haltefläche und der erste Montagebereich über eine dritte Montagefläche, wobei die Normalen der dritten Haltefläche bzw. der dritten Montagefläche dabei bevorzugt im Wesentlichen parallel zu den Normalen der zweiten Halte- bzw. Montagefläche orientiert ist. Alternativ oder zusätzlich bevorzugt kann der erste Montagebereich auch zwei, insbesondere parallele, Vorsprünge aufweisen, welche sich insbesondere in Richtung der ersten Querrichtung erstrecken, wobei sich der erste Haltebereich bevorzugt zumindest bereichsweise zwischen diesen beiden Vorsprüngen erstreckt oder in den Zwischenraum - zwischen den Vorsprüngen - einbringbar ist, sodass eine Verlagerung quer zu der Erstreckung der Vorsprünge, insbesondere in Achsrichtung und/oder in Richtung der zweiten Querrichtung, formschlüssig verhindert ist. Besonders bevorzugt weist einer oder beide Vorsprünge dabei die dritte Haltefläche oder zumindest einen Teil davon auf. Durch das formschlüssige Abstützen in positiver und negativer erster Querrichtung und/oder in positiver und negativer zweiter Querrichtung wird das Abstützen, insbesondere während des Montageprozesses, erheblich vereinfacht. Alternativ bevorzugt kann auch der erste Montagebereich den ersten Haltebereich zumindest bereichsweise in Richtung der ersten Querrichtung und/oder in Richtung der zweiten Querrichtung umgeben.

Zweckmäßigerweise umgibt der erste Haltebereich den ersten Montagebereich in Achsrichtung zumindest bereichsweise. Unter umgebenden in Achsrichtung ist dabei zu verstehen, dass der erste Haltebereich relativ zum ersten Montagebereich formschlüssig gegen eine Verlagerung in positiver und negativer Achsrichtung gesichert ist. Durch das formschlüssige Verhindern einer Relativbewegung zwischen dem ersten Haltebereich und dem ersten Montagebereich in Achsrichtung wird erreicht, dass während der Montage ein Verrutschen des Bremsmitteltragelements in Achsrichtung erschwert bzw. verhindert wird, sodass die Montage vereinfacht wird. Das Umgeben des ersten Montagebereichs durch den ersten Haltebereich kann insbesondere dadurch erreicht werden, dass der Haltebereich zwei Vorsprünge in Richtung der ersten Querrichtung oder in Richtung der zweiten Querrichtung aufweist, zwischen welchen sich zumindest ein Teil des ersten Haltebereichs erstreckt oder einbringbar ist. Alternativ bevorzugt umgibt der erste Montagebereich den ersten Haltebereich in Achsrichtung zumindest bereichsweise.

Bevorzugt weist das Bremsmitteltragelement zumindest eine Montageöffnung und das Halteelement zumindest ein Montageloch auf, wobei eine Montageöffnung mit einem Montageloch fluchtet, und dazu ausgelegt ist, ein Montagemittel aufzunehmen. Die Montageöffnung und das Montageloch können dabei im Prinzip einen beliebigen Querschnitt aufweisen. Bevorzugt ist dieser jedoch bereichsweise rund, insbesondere kreisrund, sodass eine kostengünstige Fertigung resultiert. Unter fluchten ist in diesem Zusammenhang zu verstehen, dass die Montageöffnung derart mit einem Montageloch fluchtet, dass das Montagemittel ohne verformt oder zerstört werden zu müssen, gleichzeitig durch das Montageloch und die Montageöffnung geführt werden kann. Montagemittel sind dabei Mittel, welche dazu dienen das Bremsmitteltragelement an dem Halteelement anzuordnen oder festzulegen. Insbesondere sind die Montagemittel dabei zerstörungsfrei lösbar, bevorzugt sind die Montagemittel Schrauben oder Bolzen. Alternativ bevorzugt kann es sich bei dem Montagemittel jedoch auch um Nieten oder andere Elemente handeln, wesentlich ist dabei, dass die Montagemittel dazu dienen, die beiden Hauptbestandteile der Lageranordnung miteinander zu verbinden, bevorzugt zu verspannen. Besonders bevorzugt ist es, wenn die Montageöffnung oder das Montageloch dabei ein Gewinde aufweisen, um Bauraum zu sparen. Zweckmäßigerweise weist dabei die Montageöffnung das Gewinde auf, denn hierdurch kann die Montage vereinfacht werden.

Bevorzugt erstrecken sich die zumindest eine Montageöffnung und das zumindest eine Montageloch im Wesentlichen senkrecht zur Achsrichtung. Im Wesentlichen senkrecht erstrecken sich dabei zwei Richtungen zueinander, wenn diese einen Winkel von 75° bis 105°, bevorzugt von 82° bis 98° und besonders bevorzugt von 87 bis 93° miteinander bilden. Durch das im Wesentlichen senkrechte Ausbilden der Montageöffnung bzw. des Montagelochs zur Achsrichtung wird eine in Achsrichtung besonders bauraumsparende Lageranordnung erreicht. Besonders bevorzugt erstreckt sich zumindest eine Montageöffnung bzw. ein Montageloch dabei im Wesentlichen parallel zur zweiten Querrichtung. Durch dieses im Wesentlichen parallele Ausrichten der Montageöffnung bzw. des Montagelochs in Richtung der zweiten Querrichtung wird erreicht, dass eine besonders kompakte Lageranordnung resultiert, weil der vorhandene Bauraum optimal ausgenutzt wird.

Zweckmäßigerweise bildet der erste Haltebereich ein erstes distales Ende des Halteelements aus, wobei der erste Montagebereich ein erstes distales Ende des Bremsmitteltragelements ausbildet, wobei die ersten distalen Enden das Halteelement und das Bremsmitteltragelement, insbesondere in Richtung der ersten Querrichtung, begrenzen. Durch das Ausbilden der Montagebereiche bzw. der Haltebereiche an den distalen Enden des Bremsmitteltragelements bzw. des Halteelements wird erreicht, dass mittels nur kleinen Kräften in dem ersten Montagebereich bzw. dem ersten Haltebereich ein großes Moment um die Achsrichtung erreicht werden kann, sodass die auftretende Flächenbelastung - in den formschlüssig übertragenen Flächen - gering gehalten werden kann, auch wenn ein großes Drehmoment übertragen werden muss.

Erfindungsgemäß umfasst das Halteelement einen zweiten Haltebereich und das Bremsmitteltragelement einen zweiten Montagebereich, und wobei der zweite Haltebereich mit dem zweiten Montagebereich derart formschlüssig in Eingriff steht oder bringbar ist, dass eine Kraft formschlüssig, insbesondere parallel zur zweiten Querrichtung, zwischen dem zweiten Haltebereich und dem zweiten Montagebereich übertragbar ist. Bevorzugt ist der zweite Haltebereich vom ersten Haltebereich und/oder der zweite Montagebereich vom ersten Montagebereich mindestens 10 cm beabstandet, um eine gewisse Kippelsicherheit zu erreichen. Durch dieses mittelbar oder unmittelbare formschlüssige Abstützen des zweiten Montagebereichs am zweiten Haltebereich wird erreicht, dass eine sichere formschlüssige Kraftübertragung zwischen dem zweiten Haltebereich und dem zweiten Montagebereich erreicht wird. Zusätzlich wird durch das Abstützen auch noch erzielt, dass die Montage vereinfacht werden kann, da der formschlüssige Kontakt in Richtung der zweiten Querrichtung wie ein Montageanschlag wirkt, sodass eine besonders sichere Positionierung während der Montage stattfinden kann. Dieses formschlüssige Abstützen in Richtung der zweiten Querrichtung ist dabei bevorzugt derart ausgestaltet, dass das formschlüssige Abstützen in positive und/oder in negative zweite Querrichtung erfolgt. Die negative zweite Querrichtung weist dabei bevorzugt - ausgehend von den Bremsbelägen - zu der Achsrichtung hin.

In einer bevorzugten Ausführungsform ist der zweite Haltebereich und/oder der zweite Montagebereich spiegelsymmetrisch bezüglich einer Ebene, wobei diese Symmetrieebene insbesondere eine Normale in Achsrichtung aufweist. Bevorzugt ist auch der erste Haltebereich spiegelsymmetrisch zum zweiten Haltebereich und/oder der erste Montagebereich spiegelsymmetrisch zum zweiten Montagebereich aufgebaut bzw. ausgebildet. Durch diese spiegelsymmetrische Ausgestaltung der Haltebereiche bzw. der Montagebereiche wird eine Vereinfachung der Fertigung erreicht, sodass Kosten gespart werden können.

In einer erfindungsgemäßen Weiterbildung bildet der zweite Haltebereich ein zweites distales Ende des Halteelements aus, wobei der zweite Montagebereich ein zweites distales Ende des Bremsmitteltragelements ausbildet, wobei die zweiten distalen Enden das Halteelement und das Bremsmitteltragelement, insbesondere in Richtung der ersten Querrichtung, begrenzen. Durch das Anordnen des zweiten Montagebereichs bzw. des zweiten Haltebereichs an dem jeweiligen zweiten distalen Ende wird erreicht, dass auch mittels kleiner Kräfte ein großes Drehmoment übertragen werden kann, sodass die Flächenbelastung der in Kontakt stehenden Bereiche reduziert wird und so eine besonders standfeste Lageranordnung resultiert. Insbesondere liegen die ersten distalen Enden dabei gegenüber zu den zweiten distalen Enden und beranden das Halteelement bzw. das Bremsmitteltragelement jeweils in eine positive bzw. negative Richtung, insbesondere in die erste Querrichtung. Durch das Ausbilden dieser kraftübertragenden Bereiche an distal gegenüberliegenden Enden wird unter anderem eine besonders große Verdrehsicherung erreicht, sodass die Montage der Lageranordnung erleichtert wird.

In einer bevorzugten Ausführungsform ist zumindest ein Montageloch im ersten Montagebereich und/oder im zweiten Montagebereich angeordnet und zumindest eine fluchtende Montageöffnung im ersten Haltebereich und/oder im zweiten Haltebereich. Hierdurch wird erreicht, dass die Anordnung des Bremsmitteltragelements an dem Halteelement nur geringe Bereiche um die Montageöffnung bzw. um das Montageloch unter Spannung setzt bzw. setzen kann, da die Montage- bzw. die Halteflächen sich räumlich direkt benachbart zu den Montagelöchern oder den Montageöffnungen befinden, sodass die restlichen Bereiche des Bauteils oder der Bauteile dünnwandig ausgestaltet werden können, sodass Gewicht gespart werden kann. Besonders bevorzugt durchstößt eine Montageöffnung dabei eine zweite Montagefläche und/oder ein Montageloch durchstößt dabei eine zweite Haltefläche.

Bevorzugt ist am ersten Montagebereich und/oder am ersten Haltebereich ein erster Anschlag angeordnet. Der erste Anschlag ist dabei ein Vorsprung oder eine Anschlagfläche, welche sich insbesondere in Richtung der ersten und/oder der zweiten Querrichtung erstreckt und dazu ausgelegt ist, als Begrenzung in Achsrichtung zu fungieren. Dieser Anschlag ist daher dazu ausgelegt, als ein formschlüssiger Anschlag in positiver oder negativer Achsrichtung zwischen Bremsmitteltragelement und dem Halteelement zu fungieren. Der erste Anschlag ist insbesondere derart angeordnet bzw. ausgebildet, dass die Verlagerung dann formschlüssig verhindert wird, wenn die Montageposition erreicht ist. Hierdurch wird die Montage vereinfacht, sodass Kosten gespart werden können. Bevorzugt ist der erste Anschlag dabei derart ausgeformt, dass dieser ein separates Bauteil darstellt, welches an den ersten Montagebereich und/oder an den ersten Haltebereich stoffschlüssig, formschlüssig und/oder kraftschlüssig angefügt ist. Hierdurch kann eine besonders einfache Fertigung erreicht werden, sodass eine kostengünstige Lageranordnung resultiert. Besonders bevorzugt berandet der Anschlag dabei den ersten Montagebereich und/oder den ersten Haltebereich in Achsrichtung. Hierdurch kann insbesondere ein Eindringen von Schmutz in die abstützenden Kontakte verhindert werden. Besonders bevorzugt sind zwei erste Anschläge an dem ersten Montagebereich und/oder dem ersten Haltebereich angeordnet und wobei der eine erste Anschlag eine Verlagerung in positive und der andere erste Anschlag in negative Achsrichtung formschlüssig verhindern. Hierdurch wird eine besonders exakte Positionierung während des Montageprozesses erreicht, sodass dieser Beschleunigt werden kann und somit Kosten gespart werden können.

Zweckmäßigerweise ist am zweiten Montagebereich und/oder am zweiten Haltebereich ein zweiter Anschlag angeordnet. Der zweite Anschlag kann dabei die gleichen Merkmale und Vorteile aufweisen wie der erste Anschlag, wobei der zweite Anschlag jedoch am zweiten Montagebereich und/oder am zweiten Haltebereich angeordnet ist. Besonders bevorzugt sind zwei zweite Anschläge an dem zweiten Montagebereich und/oder dem zweiten Haltebereich angeordnet und wobei der eine zweite Anschlag eine Verlagerung in positive und der andere zweite Anschlag in negative Achsrichtung formschlüssig verhindern. Hierdurch wird eine besonders exakte Positionierung während des Montageprozesses erreicht, sodass dieser Beschleunigt werden kann und somit Kosten gespart werden können. Besonders bevorzugt sind der erste und der zweite Anschlag so positioniert, dass sie dem aus der Gewichtskraft des Bremssattels um den ersten Montagebereich herum wirkenden resultierenden Drehmoment entgegenwirken.

Zweckmäßigerweise weist das Bremsmitteltragelement zumindest einen Festlegungsbereich auf. Der Festlegungsbereich dient dazu, einen Bremsenträger, insbesondere einen Bremssattel, mittelbar oder unmittelbar aufzunehmen oder an dem Bremsmitteltragelement festzulegen. Besonders bevorzugt umfasst der Festlegungsbereich dabei Öffnungen, welche sich bevorzugt in Richtung der Achsrichtung erstrecken und dazu ausgelegt sind, Führungselemente oder Montagemittel aufzunehmen. Hierdurch resultiert ein besonders kostengünstiges Bremsmitteltragelement. Zusätzlich wird hierdurch erreicht, dass bereits existierende Systeme durch eine erfindungsgemäße Lageranordnung für einen Bremsenträger ausgetauscht werden können und so die Vorteile der Erfindung auch in bereits existierenden Systemen verfügbar gemacht werden.

In einer weiteren bevorzugten Ausführungsform weisen der erste Montagebereich und/oder der zweite Montagebereich einen Festlegungsbereich auf. Durch dieses Anordnen zumindest eines Festlegungsbereichs, bevorzugt aller Festlegungsbereiche, in dem ersten bzw. in dem zweiten Montagebereich wird erreicht, dass ein besonders günstiger Kraftfluss resultiert, sodass die belasteten Bereiche im Bremsmitteltragelement reduziert werden können. Dies führt dazu, dass viele Bereiche des Bremsmitteltragelements dünnwandig ausgestaltet werden können, sodass Gewicht eingespart werden kann.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
Figur 1 eine erfindungsgemäße Lageranordnung für einen Bremsträger;
Figur 2 einen Ausschnitt aus einer erfindungsgemäßen Ausführungsform einer Lageranordnung für einen Bremsenträger;
Figur 3 eine Explosionszeichnung einer weiteren erfindungsgemäßen Ausführungsform einer Lageranordnung für einen Bremsenträger;
Figur 4 eine alternative Ausführungsform einer erfindungsgemäßen Lageranordnung für einen Bremsenträger;
Figur 5 eine perspektivische Ansicht einer erfindungsgemäßen Ausführungsform einer Lageranordnung für einen Bremsenträger.

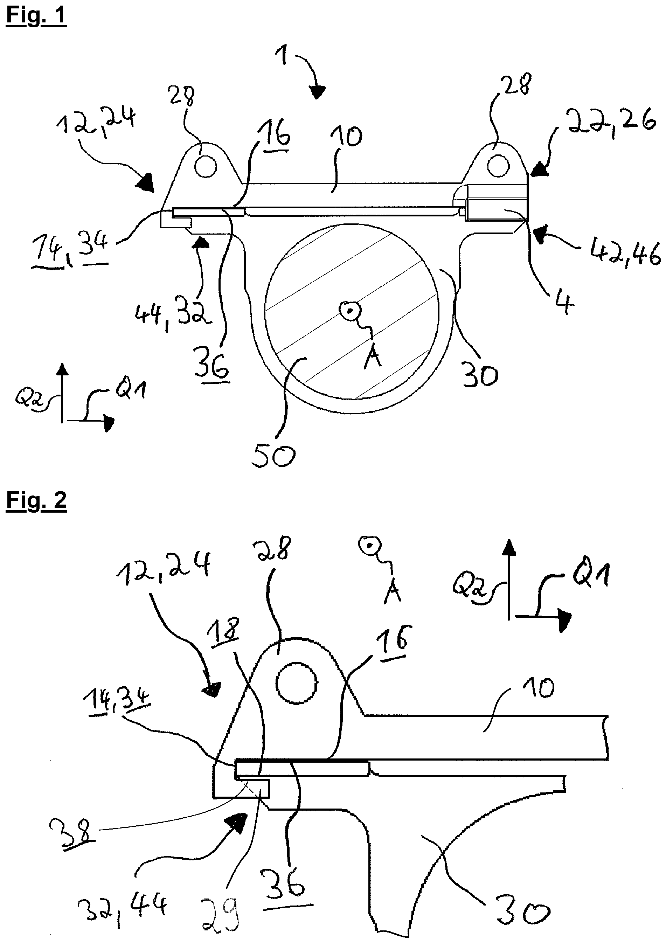

In der Figur 1 ist eine erfindungsgemäße Lageranordnung für einen Bremsenträger 1 gezeigt, wobei die Lageranordnung ein Bremsmitteltragelement 10 und ein Halteelement 30 aufweist. Zur Kraftübertragung zwischen diesen beiden Elementen verfügt das Bremsmitteltragelement 10 über einen ersten Montagebereich 12 und einen zweiten Montagebereich 22, wobei der erste Montagebereich 12 ein erstes distales Ende 24 des Bremsmitteltragelements 10 in negativer erster Querrichtung Q1 bildet und der zweite Montagebereich 22 ein zweites distales Ende 26 des Bremsmitteltragelements 10 in positiver erster Querrichtung Q1. Der erste Montagebereich 12 verfügt über eine erste Montagefläche 14 und eine zweite Montagefläche 16. Die erste Montagefläche 14 ist dabei parallel zur ersten Haltefläche 34 des ersten Haltebereichs 32 orientiert, wobei der erste Haltebereich 32 ein erstes distales Ende 44 des Halteelements 30 und der zweite Haltebereich 42 ein zweites distales Ende 46 des Halteelements 30 ausbilden. Diese distalen Enden beranden dabei das Halteelement 30 in positive und negative erste Querrichtung Q1. Die zweite Haltefläche 36 ist dabei parallel zur zweiten Montagefläche 16 orientiert. In seinem mittleren Abschnitt - in Richtung der ersten Querrichtung Q1 - umschließt das Halteelement 30 die Achse 50, an welcher die Lageranordnung festgelegt ist. Der zweite Haltebereich 42 weist dabei einen zweiten Anschlag 4 auf. Um einen Bremsenträger aufzunehmen, verfügt das Bremsmitteltragelement 10 über zwei Festlegungsbereiche 28, wobei diese jeweils im ersten Montagebereich 12 bzw. im zweiten Montagebereich 22 ausgebildet bzw. angeordnet sind.

In der Figur 2 ist ein Ausschnitt aus einer Ausführungsform der Lageranordnung für einen Bremsenträger 1 gezeigt, wobei der dargestellte Ausschnitt zu der in der Figur 1 dargestellten Ausführungsform passen könnte. Bemerkenswert ist dabei in der in der Figur 2 dargestellten Ausführungsform, dass der erste Montagebereich 12 derart ausgestaltet ist, dass dieser den ersten Haltebereich 32 durch zwei Vorsprünge 29 derart umgibt, dass dieser unter anderem formschlüssig gegen eine Verlagerung in positiver und negativer zweiter Querrichtung Q2 und in positiver und negativer Achsrichtung A gesichert ist. In positive Querrichtung Q2 wird eine Verlagerung durch den Kontakt der zweiten Montagefläche 16 mit der zweiten Haltefläche 36 verhindert und in negativer zweiter Querrichtung durch den Kontakt der dritten Montagefläche 18 mit der dritten Haltefläche 38.

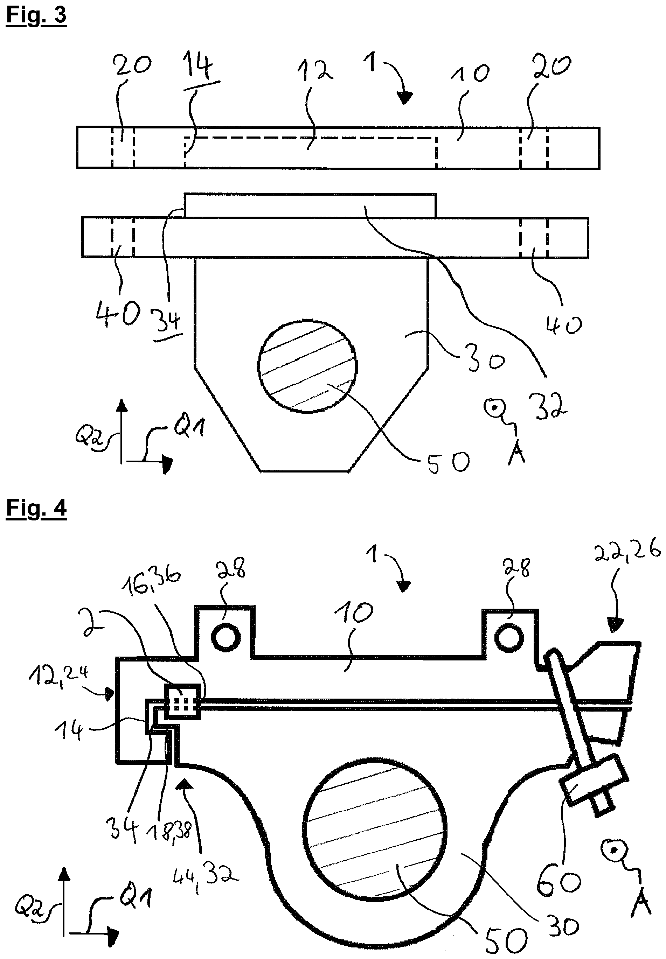

In der Figur 3 ist eine Explosionszeichnung einer Lageranordnung für einen Bremsenträger 1 gezeigt, wobei diese Explosionszeichnung das Bremsmitteltragelement 10 kurz vor der Montage mit dem Halteelement 30 zeigt. Zur Anordnung verfügt das Bremsmitteltragelement 10 über zwei Montageöffnungen 20, welche mit jeweils einem Montageloch 40 des Halteelements 30 fluchten. In der dargestellten Ausführungsform ist der erste Montagebereich 12 als eine Nut ausgebildet, welche mit dem ersten Haltebereich 32 ähnlich einer Passfeder in Eingriff bringbar ist, wobei die erste Montagefläche 14 derart orientiert ist, dass diese formschlüssig eine Verlagerung in Richtung der ersten Querrichtung Q1 mit der ersten Haltefläche 34 verhindert.

In der Figur 4 ist eine alternative Ausführung einer Lageranordnung für einen Bremsenträger 1 dargestellt, wobei das Bremsmitteltragelement 10 mit dem Halteelement 30 über das Montagemittel 60 in Form eines Spannbügels miteinander verspannt ist. Hervorzuheben ist dabei in der dargestellten Ausführungsform, dass der erste Montagebereich 12, welcher am ersten distalen Ende 24 des Bremsmitteltragelement 10 angeordnet ist, über einen ersten Anschlag 2 verfügt, welcher eine Stirnfläche in Richtung der Achsrichtung A ausgebildet, die als formschlüssige Anschlagsfläche fungieren kann. Die erste Montagefläche 14 grenzt dabei rechtwinklig an die zweite Montagefläche 16 und an die dritte Montagefläche 18 an. Der erste Haltebereich 32 weist eine erste Haltefläche 34 zum Kontakt mit der ersten Montagefläche 14, eine zweite Haltefläche 36 zum Kontakt mit der zweiten Montagefläche 16 und eine dritte Haltefläche 38 zum Kontakt mit der dritten Montagefläche 18 auf, wobei diese Flächen jeweils parallel zu den jeweilig anderen Kontaktflächen orientiert sind. Zur Festlegung eines Bremsenträgers verfügt das Bremsmitteltragelement 10 über zwei Festlegungsbereiche 28, welche jeweils eine Öffnung in Richtung der Achsrichtung A aufweisen.

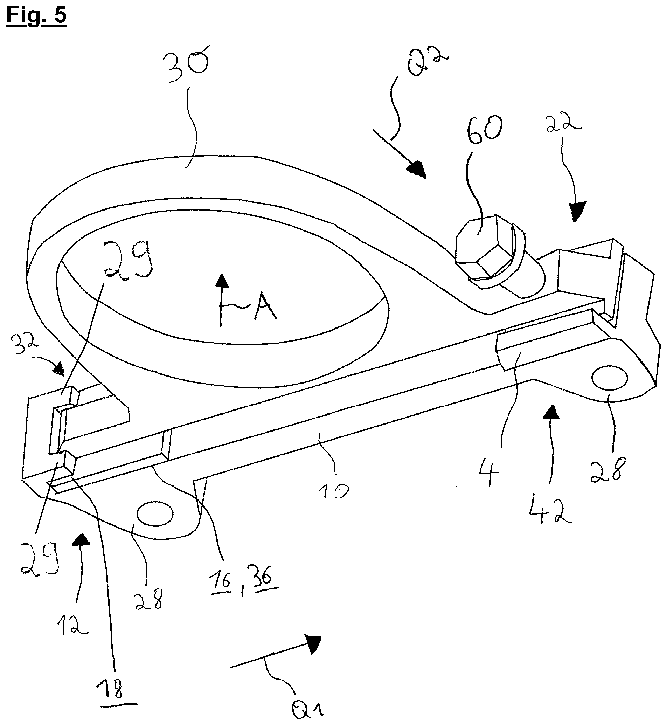

In der Figur 5 ist eine erfindungsgemäße Lageranordnung für einen Bremsenträger gezeigt, wobei der erste Montagebereich 12 des Bremsmitteltragelements 10, insbesondere durch zwei Vorsprünge 29, welche sich in Richtung der ersten Querrichtung Q1 erstrecken, derart den ersten Haltebereich 32 des Halteelements 30 umgibt, dass zumindest eine relative Verlagerung formschlüssig in positive und negative zweite Querrichtung Richtung Q2 und in positive und negative Achsrichtung A verhindert ist. Das Montagemittel 60, welches sich in Richtung der zweiten Querrichtung Q2 erstreckt, dient dabei dazu, den zweiten Montagebereich 22 relativ zu dem zweiten Haltebereich 42 zu befestigen bzw. zu verspannen.

**Bezugszeichenliste:**

| | | |
|---|---|---|
| 1 | - | Lageranordnung für einen Bremsenträger |
| 2 | - | erster Anschlag |
| 4 | - | zweiter Anschlag |
| 10 | - | Bremsmitteltragelement |
| 12 | - | erster Montagebereich |
| 14 | - | erste Montagefläche |
| 16 | - | zweite Montagefläche |
| 18 | - | dritte Montagefläche |
| 20 | - | Montageöffnung |
| 22 | - | zweiter Montagebereich |
| 24 | - | erstes distales Ende des Bremsmitteltragelements |
| 26 | - | zweites distales Ende des Bremsmitteltragelements |
| 28 | - | Festlegungsbereich |
| 29 | - | Vorsprung |
| 30 | - | Halteelement |
| 32 | - | erster Haltebereich |
| 34 | - | erste Haltefläche |
| 36 | - | zweite Haltefläche |
| 38 | - | dritte Haltefläche |
| 40 | - | Montageloch |
| 42 | - | zweiter Haltebereich |
| 44 | - | erstes distales Ende des Halteelements |
| 46 | - | zweites distales Ende des Halteelements |
| 50 | - | Achse |
| 60 | - | Montagemittel |
| A | - | Achsrichtung |
| Q1 | - | erste Querrichtung |
| Q2 | - | zweite Querrichtung |

## Patentansprüche

1. Lageranordnung für einen Bremsenträger (1), insbesondere für ein Nutzfahrzeug, umfassend ein Halteelement (30) und ein Bremsmitteltragelement (10), wobei das Halteelement (30) form-, stoff- und/oder kraftschlüssig an einer Achse (50) oder einem Fahrwerksteil festgelegt ist oder festlegbar ist,
wobei die Achse (50) sich entlang einer Achsrichtung (A) erstreckt,
wobei das Bremsmitteltragelement (10) einen ersten Montagebereich (12) aufweist,
wobei das Halteelement (30) einen ersten Haltebereich (32) aufweist,
und wobei der erste Montagebereich (12) unmittelbar oder mittelbar mit dem ersten Haltebereich (32) in Eingriff steht oder bringbar ist,
sodass eine Verlagerung entlang einer ersten Querrichtung (Q1) zwischen dem Halteelement (30) und dem Bremsmitteltragelement (10) formschlüssig verhindert ist,
wobei das Halteelement (30) einen zweiten Haltebereich (42) und das Bremsmitteltragelement (10) einen zweiten Montagebereich (22) umfasst,
und wobei der zweite Haltebereich (42) mit dem zweiten Montagebereich (22) derart formschlüssig in Eingriff steht oder bringbar ist,
dass eine Kraft formschlüssig, insbesondere parallel zur zweiten Querrichtung (Q2), zwischen dem zweiten Haltebereich (42) und dem zweiten Montagebereich (22) übertragbar ist,
**dadurch gekennzeichnet, dass**
der zweite Haltebereich (42) ein zweites distales Ende (46) des Halteelements (30) ausbildet,
wobei der zweite Montagebereich (22) ein zweites distales Ende (26) des Bremsmitteltragelements (10) ausbildet, und
wobei die zweiten distalen Enden (26,46) das Halteelement (30) und das Bremsmitteltragelement (10), insbesondere in Richtung der ersten Querrichtung (Q1), begrenzen.

2. Lageranordnung für einen Bremsenträger (1) gemäß Anspruch 1,
wobei der erste Haltebereich (32) und/oder der erste Montagebereich (12) spiegelsymmetrisch bezüglich einer Ebene ist/sind,
wobei diese Symmetrieebene insbesondere eine Normale in Achsrichtung (A) aufweist.

3. Lageranordnung für einen Bremsenträger (1) gemäß einem der vorhergehenden Ansprüche,
wobei der erste Haltebereich (32) eine erste Haltefläche (34) aufweist, wobei der erste Montagebereich (12) eine erste Montagefläche (14) aufweist, und wobei die erste Haltefläche (34) und die erste Montagefläche (14) unmittelbar kontaktieren oder unmittelbar in Kontakt bringbar sind,
sodass eine Verlagerung in die erste Querrichtung (Q1) durch den unmittelbaren Kontakt der ersten Haltefläche (34) mit der ersten Montagefläche (14) verhindert ist oder verhinderbar ist.

4. Lageranordnung für Bremsträger (1) gemäß einem der vorhergehenden Ansprüche,
wobei der erste Haltebereich (32) eine zweite Haltefläche (36) aufweist, wobei der erste Montagebereich (12) eine zweite Montagefläche (16) aufweist,
und wobei die zweite Haltefläche (36) derart unmittelbar mit der zweiten Montagefläche (16) in Eingriff steht oder bringbar ist,
sodass eine Verlagerung entlang einer zweiten Querrichtung (Q2) zwischen dem Halteelement (30) und dem Bremsmitteltragelement (10) formschlüssig verhindert ist.

5. Lageranordnung für einen Bremsenträger (1) gemäß einem der vorhergehenden Ansprüche,
wobei der erste Haltebereich (32) den ersten Montagebereich (12) zumindest bereichsweise in Richtung der ersten Querrichtung (Q1) und/oder in Richtung der zweiten Querrichtung (Q2) umgibt.

6. Lageranordnung für einen Bremsträger (1) gemäß einem der vorhergehenden Ansprüche,
wobei der erste Haltebereich (32) den ersten Montagebereich (12) in Achsrichtung (A) zumindest bereichsweise umgibt.

7. Lageranordnung für einen Bremsträger (1) gemäß einem der vorhergehenden Ansprüche,
wobei das Bremsmitteltragelement (10) zumindest eine Montageöffnung (20) und das Halteelement (30) zumindest ein Montageloch (40) aufweist,
wobei eine Montageöffnung (20) mit einem Montageloch (40) fluchtet,
und dazu ausgelegt ist, ein Montagemittel (60) aufzunehmen.

8. Lageranordnung für einen Bremsträger (1) gemäß Anspruch 7,
wobei sich die zumindest eine Montageöffnung (20) und das zumindest eine Montageloch (40) im Wesentlichen senkrecht zur Achsrichtung (A) erstrecken.

9. Lageranordnung für einen Bremsträger (1) gemäß einem der vorhergehenden Ansprüche,
wobei der erste Haltebereich (32) ein erstes distales Ende (44) des Halteelements (30) ausbildet,
wobei der erste Montagebereich (12) ein erstes distales Ende (24) des Bremsmitteltragelements (10) ausbildet,
wobei die ersten distalen Enden (24,44) das Halteelement (30) und das Bremsmitteltragelement (10), insbesondere in Richtung der ersten Querrichtung (Q1), begrenzen.

10. Lageranordnung für einen Bremsträger (1) gemäß einem der vorhergehenden Ansprüche,
wobei am ersten Montagebereich (12) und/oder am ersten Haltebereich (32) ein erster Anschlag (2) angeordnet ist.

11. Lageranordnung für einen Bremsträger (1) gemäß einem der vorhergehenden Ansprüche,
wobei am zweiten Montagebereich (22) und/oder am zweiten Haltebereich (42) ein zweiter Anschlag (4) angeordnet ist

12. Lageranordnung für einen Bremsträger (1) gemäß einem der vorhergehenden Ansprüche,
wobei das Bremsmitteltragelement (10) zumindest einen Festlegungsbereich (28) aufweist.

13. Lageranordnung für einen Bremsträger (1) gemäß einem der vorhergehenden Ansprüche,
wobei der erste Montagebereich (12) und/oder der zweite Montagebereich (22) einen Festlegungsbereich (28) aufweisen.

## Claims

1. A bearing assembly for a brake carrier (1), in particular for a utility vehicle, comprising a retaining element (30) and a braking means support element (10),
wherein the retaining element (30) is or can be fixed by form fit, substance bonding and/or force fit to an axle (50) or a chassis com ponent,
wherein the axle (50) extends along an axial direction (A),
wherein the braking means support element (10) has a first mounting region (12),
wherein the retaining element (30) has a first retaining region (32), and
wherein the first mounting region (12) is or can be brought into direct or indirect engagement with the first retaining region (32),
such that a displacement along a first transverse direction (Q1) between the retaining element (30) and the braking means support element (10) is prevented by form fit,
wherein the retaining element (30) comprises a second retaining region (42), and the braking means support element (10) comprises a second mounting region (22),
and wherein the second retaining region (42) is or can be brought into form-fit engagement with the second mounting region (22) such that a force, in particular parallel to the second transverse direction (Q2), can be transmitted between the second retaining region (42) and the second mounting region (22) by form fit,
**characterized in that**
the second retaining region (42) forms a second distal end (46) of the retaining element (30),
wherein the second mounting region (22) forms a second distal end (26) of the braking means support element (10), and
wherein the second distal ends (26, 46) delimit the retaining element (30) and the braking means support element (10), in particular in the first transverse direction (Q1).

2. The bearing assembly for a brake carrier (1) as claimed in claim 1,
wherein the first retaining region (32) and/or the first mounting region (12) is/are mirror-symmetrical relative to a plane,
wherein this plane of symmetry in particular has a normal in the axial direction (A).

3. The bearing assembly for a brake carrier (1) as claimed in any of the preceding claims,
wherein the first retaining region (32) has a first retaining face (34), wherein the first mounting region (12) has a first mounting face (14), and wherein the first retaining face (34) and the first mounting face (14) contact each other directly or can be brought into direct contact so that a displacement in the first transverse direction (Q1) is or can be prevented by the direct contact of the first retaining face (34) with the first mounting face (14).

4. The bearing assembly for a brake carrier (1) as claimed in any of the preceding claims,
wherein the first retaining region (32) has a second retaining face (36),
wherein the first mounting region (12) has a second mounting face (16),
and wherein the second retaining face (36) is or can be brought into direct engagement with the second mounting face (16) such that a displacement along a second transverse direction (Q2) between the retaining element (30) and the braking means support element (10) is prevented by form fit.

5. The bearing assembly for a brake carrier (1) as claimed in any of the preceding claims,
wherein the first retaining region (32) at least partially surrounds the first mounting region (12) in the first transverse direction (Q1) and/or in the second transverse direction (Q2).

6. The bearing assembly for a brake carrier (1) as claimed in any of the preceding claims,
wherein the first retaining region (32) at least partially surrounds the first mounting region (12) in the axial direction (A).

7. The bearing assembly for a brake carrier (1) as claimed in any of the preceding claims,
wherein the braking means support element (10) has at least one mounting opening (20) and the retaining element (30) has at least one mounting hole (40),
wherein a mounting opening (20) aligns with a mounting hole (40) and is configured to receive a mounting means (60).

8. The bearing assembly for a brake carrier (1) as claimed in claim 7, wherein the at least one mounting opening (20) and the at least one mounting hole (40) extend substantially perpendicularly to the axial direction (A).

9. The bearing assembly for a brake carrier (1) as claimed in any of the preceding claims,
wherein the first retaining region (32) forms a first distal end (44) of the retaining element (30),
wherein the first mounting region (12) forms a first distal end (24) of the braking means support element (10),
wherein the first distal ends (24, 44) delimit the retaining element (30) and the braking means support element (10), in particular in the first transverse direction (Q1).

10. The bearing assembly for a brake carrier (1) as claimed in any of the preceding claims,
wherein a first stop (2) is arranged on the first mounting region (12) and/or on the first retaining region (32).

11. The bearing assembly for a brake carrier (1) as claimed in any of the preceding claims,
wherein a second stop (4) is arranged on the second mounting region (22) and/or on the second retaining region (42).

12. The bearing assembly for a brake carrier (1) as claimed in any of the preceding claims,
wherein the braking means support element (10) comprises at least one fixing region (28).

13. The bearing assembly for a brake carrier (1) as claimed in any of the preceding claims,
wherein the first mounting region (12) and/or the second mounting region (22) comprise a fixing region (28).

## Revendications

1. Ensemble formant palier pour un support de frein (1), en particulier pour un véhicule utilitaire, comprenant un élément de retenue (30) et un élément porteur de moyen de freinage (10), l'élément de retenue (30) étant fixé ou pouvant être fixé par coopération de forme, de matière et/ou de force sur un essieu (50) ou sur une partie du train de roulement, l'essieu (50) s'étendant le long d'une direction axiale (A), l'élément porteur de moyen de freinage (10) présentant une première zone de montage (12),
dans lequel
l'élément de retenue (30) présente une première zone de retenue (32), et la première zone de montage (12) est ou peut être amenée en engagement directement ou indirectement avec la première zone de retenue (32) de manière à empêcher par coopération de forme un déplacement le long d'une première direction transversale (Q1) entre l'élément de retenue (30) et l'élément porteur de moyen de freinage (10),
l'élément de retenue (30) présente une deuxième zone de retenue (42), et l'élément porteur de moyen de freinage (10) présente une deuxième zone de montage (22),
la deuxième zone de retenue (42) est ou peut être amenée en engagement par coopération de forme avec la deuxième zone de montage (22) de manière à pouvoir transmettre, entre la deuxième zone de retenue (42) de la deuxième zone de montage (22), une force par coopération de forme en particulier parallèlement à la deuxième direction transversale (Q2),
**caractérisé en ce que**
la deuxième zone de retenue (42) forme une deuxième extrémité distale (46) de l'élément de retenue (30),
la deuxième zone de montage (22) forme une deuxième zone distale (26) de l'élément porteur de moyen de freinage (10), et
les deuxièmes extrémités distales (26, 46) délimitent l'élément de retenue (30) et l'élément porteur de moyen de freinage (10), en particulier dans le sens de la première direction transversale (Q1).

2. Ensemble formant palier pour un support de frein (1) selon la revendication 1,
dans lequel la première zone de retenue (32) et/ou la première zone de montage (12) est/sont axialement symétriques par rapport à un plan,
ce plan de symétrie ayant en particulier une normale dans la direction axiale (A).

3. Ensemble formant palier pour un support de frein (1) selon l'une des revendications précédentes,
dans lequel la première zone de retenue (32) présente une première surface de retenue (34),
la première zone de montage (12) présente une première surface de montage (14), et
la première surface de retenue (34) et la première surface de montage (14) sont en contact direct ou peuvent être mises en contact direct,
de sorte qu'un déplacement dans la première direction transversale (Q1) est empêché ou peut être empêché par le contact direct de la première surface de retenue (34) avec la première surface de montage (14).

4. Ensemble formant palier pour un support de frein (1) selon l'une des revendications précédentes,
dans lequel la première zone de retenue (32) présente une deuxième surface de retenue (36),
la première zone de montage (12) présente une deuxième surface de montage (16), et
la deuxième surface de retenue (36) est ou peut être amenée en engagement directement avec la deuxième surface de montage (16) de manière à empêcher par coopération de forme un déplacement le long d'une deuxième direction transversale (Q2) entre l'élément de retenue (30) et l'élément porteur de moyen de freinage (10).

5. Ensemble formant palier pour un support de frein (1) selon l'une des revendications précédentes,
dans lequel la première zone de retenue (32) entoure la première zone de montage (12) au moins localement dans le sens de la première direction transversale (Q1) et/ou dans le sens de la deuxième direction transversale (Q2).

6. Ensemble formant palier pour un support de frein (1) selon l'une des revendications précédentes,
dans lequel la première zone de retenue (32) entoure au moins localement la première zone de montage (12) dans la direction axiale (A).

7. Ensemble formant palier pour un support de frein (1) selon l'une des revendications précédentes,
dans lequel l'élément porteur de moyen de freinage (10) présente au moins une ouverture de montage (20), et l'élément de retenue (30) présente au moins un trou de montage (40), et
une ouverture de montage (20) est en alignement avec un trou de montage (40) et est conçue pour recevoir un moyen de montage (60).

8. Ensemble formant palier pour un support de frein (1) selon la revendication 7,
dans lequel ladite au moins une ouverture de montage (20) et ledit au moins un trou de montage (40) s'étendent sensiblement perpendiculairement à la direction axiale (A).

9. Ensemble formant palier pour un support de frein (1) selon l'une des revendications précédentes,
dans lequel la première zone de retenue (32) forme une première extrémité distale (44) de l'élément de retenue (30),
la première zone de montage (12) forme une première extrémité distale (24) de l'élément porteur de moyen de freinage (10), et
les premières extrémités distales (24, 44) délimitant l'élément de retenue (30) et l'élément porteur de moyen de freinage (10), en particulier dans le sens de la première direction transversale (Q1).

10. Ensemble formant palier pour un support de frein (1) selon l'une des revendications précédentes,
dans lequel une première butée (2) est disposée sur la première zone de montage (12) et/ou sur la première zone de retenue (32).

11. Ensemble formant palier pour un support de frein (1) selon l'une des revendications précédentes,
dans lequel une deuxième butée (4) est disposée sur la deuxième zone de montage (22) et/ou sur la deuxième zone de retenue (42).

12. Ensemble formant palier pour un support de frein (1) selon l'une des revendications précédentes,
dans lequel l'élément porteur de moyen de freinage (10) présente au moins une zone d'immobilisation (28).

13. Ensemble formant palier pour un support de frein (1) selon l'une des revendications précédentes,
dans lequel la première zone de montage (12) et/ou la deuxième zone de montage (22) présente(nt) une zone d'immobilisation (28).
